# EUROPÄISCHE PATENTSCHRIFT

(11) **EP 0 892 922 B1**
(45) Veröffentlichungstag und Bekanntmachung des Hinweises auf die Patenterteilung: **19.03.2008**
(21) Anmeldenummer: 97947708.0
(22) Anmeldetag: 27.10.1997
(51) Int. Cl.: G01N 27/407

(54) **SENSOR ZUR BESTIMMUNG DER KONZENTRATION OXIDIERBARER BESTANDTEILE IN EINEM GASGEMISCH**
SENSOR FOR DETERMINING THE CONCENTRATION OF OXIDIZABLE CONSTITUENTS IN A GAS MIXTURE
DETECTEUR POUR DETERMINER LA CONCENTRATION DE CONSTITUANTS OXYDABLES DANS UN MELANGE GAZEUX

(30) Priorität: 15.11.1996 DE 19647268
(43) Veröffentlichungstag der Anmeldung: 27.01.1999
(73) Patentinhaber: ROBERT BOSCH GMBH, 70442 Stuttgart (DE)
(72) Erfinder: KÖHLER, Thomas, D-70499 Stuttgart (DE); SCHUMANN, Bernd, D-71277 Rutesheim (DE)
(86) Internationale Anmeldenummer: PCT/DE1997/002490
(87) Internationale Veröffentlichungsnummer: WO 1998/022812

(56) Entgegenhaltungen:
- DE-A- 4 244 723
- US-A- 3 849 282
- US-A- 5 522 979
- DATABASE ROEMPP-ONLINE Roempp; Seltenerdmetalle

## Beschreibung

Die Erfindung geht aus von einem Sensor zur Bestimmung der Konzentration oxidierbarer Bestandteile in einem Gasgemisch insbesondere zur Bestimmung ungesättigter und gesättigter Kohlenwasserstoffe nach der Gattung des Hauptanspruches.

### Stand der Technik

Gasdetektoren, die Sensormaterialien der allgemeinen Formel A₂₋ₓA'ₓBO₄ enthalten, sind aus der DE-23 34 044 C3 bekannt. Diese werden zum Nachweis von oxidierbaren Gasen verwendet. Darüber hinaus ist aus der US 3,849,282 eine leitfähige Beschichtung für Elektroden bekannt, die aus eine Verbindung des ABO₄-Typs gebildet ist. Weiterhin ist aus der DE-42 44 723 A1 bekannt, Cuprate der Seltenen Erden der Formel A₂₋ₓLₓCuO₄ zum Nachweis von Sauerstoff in Gasgemischen, insbesondere in Abgasen von von Verbrennungsmaschinen und Verbrennungsanlagen zu verwenden. Jedoch hat es sich bisher als schwierig erwiesen, geeignete Materialien zur Bestimmung von gesättigten und ungesättigten Kohlenwasserstoffen zu finden. Dies lag an der geringen Korrosionsstabilität der verwendeten Elektrodenmaterialien, die bislang eine hohe Tendenz zu störender Sulfatbildung auf der Elektrodenoberfläche aufwiesen. Die einzige bisher bekannte und relativ befriedigende Lösung wird in der JP-OS 600 61 654 beschrieben, in der an metallischen Meßelektroden aus einer Platin-Gold Legierung bzw. aus Platin Kohlenwasserstoffe bestimmt werden können.

Ein weiterer Sensor zur Bestimmung von Sauerstoff ist der US 5,522,979 zu entnehmen. Diese umfasst eine Elektrodenanordnung mit einer Mess- und einer Referenzelektrode, die über einen Festelektrolyten miteinander verbunden sind.

### Vorteile der Erfindung

Gegenüber dem bekannten Stande der Technik weist der erfindungsgemäße Sensor mit dem verwendeten Material für die Meßelektrode der die Struktur wieder gebenden allgemeinen Formel AB₂O₆, insbesondere Materialien aus der Klasse der Äschynite im engeren Sinne, die nach ihren häufigsten Vertretern auch als Titanniobate der Seltenen Erden bezeichnet werden, der Samarskite, die auch als Yttrocolumbite bezeichnet werden und der Euxenite, eine sehr hohe Korrosionsbeständigkeit bei hohen Temperaturen und eine geringe Tendenz zur Sulfatbildung auf. Durch die möglichen strukturellen Variationen der im folgenden zur Vereinfachung allgemein als Äschynite bezeichneten Verbindungsklassen ist es möglich, für verschiedene zu bestimmende oxidierbare Gase entsprechende Kombinationen von Metallen für die A- und B-Positionen in den AB₂O₆ Strukturen gemäss Anspruch 1 zur Verfügung zu stellen. Weiterhin ermöglicht diese große strukturelle Mannigfaltigkeit, daß nötigenfalls entsprechende Oktaederpositionen in der AB₂O₆-Struktur mit einer Vielzahl von Kationen vergleichbarer Ionenradii dotiert werden können. Durch die in den Unteransprüchen aufgeführten Maßnahmen sind vorteilhafte Weiterbildungen und Verbesserungen des im Hauptanspruche angegebenen Sensors möglich.

Ein besonderer Vorteil des erfindungsgemäßen Sensors besteht in der Verwendung von natürlichen Äschyniten als Meßelektrode, beispielsweise Samarskitwiikit, Yttrotantalit, und Clopinit, die an ihren Lagerstätten häufig vorkommen und einfach zu gewinnen sind. Dies führt zu einem kostengünstigen Einsatz entsprechend variierbarer Äschynite.

Für eine spezifische Anwendung ist es allerdings auch in besonders vorteilhafter Weise möglich, beispielsweise durch das allgemein bekannte Verfahren der Hydrothermalsynthese bei niedriger Temperatur und geringem Druck, oder durch Hochtemperatursynthese in Quarzampullen die entsprechenden Verbindungen gewünschter Stöchiometrie einfach und in großem Maßstabe zu synthetisieren. Bei der Hydrothermalsynthese entstehen zuerst Verbindungen in der sogenannten Äschynitphase, die sich bei höherer Temperatur in die Euxenit-Hochtemperaturphase monotrop umwandeln.

In besonders bevorzugter Weise ist die Position B der gemischten Metalloxide der Äschynitfamilie zumindest teilweise ersetzt durch Übergangsmetalle. Diese sind ausgewählt aus den Platinmetallen, d.h. also Metalle der Gruppe Ruthenium, Rhodium, Palladium, Osmium, Iridium und Platin, den Münzmetallen Kupfer, Silber, Gold, bzw. den Metallen der Eisengruppe, Eisen, Kobalt und Nickel sowie Rhenium oder durch Übergangsmetalle im Oxidationszustand +5. Dabei haben sich insbesondere Verbindungen mit Nickeldotierung als vorteilhaft erwiesen. Die B-Positionen des Äschynites werden in einer Menge von 0,005 bis 0,2 Molprozent durch Ni²⁺-Kationen ersetzt. Dies erhöht die Empfindlichkeit für Kohlenwasserstoffe und gleichzeitig die elektrische Leitfähigkeit des derart dotierten Äschynites.

In einer weiteren bevorzugten Ausführung kann der Sauerstoff in der AB₂O₆-Struktur teilweise durch Hydroxid- oder Fluoridanionen ersetzt sein, was einerseits eine größere thermodynamische und kinetische Stabilität und andererseits auch eine verbesserte elektrische Leitfähigkeit des Materials bewirkt.

In einer weiteren bevorzugten Ausführung wird ein Äschynit verwendet, der auch in der Position A defizitär ist (A₁₋ₓ), d.h. eine Fehlstellenbesetzung aufweist. Auch diese Maßnahme verbessert die elektrische Leitfähigkeit des Äschynites entscheidend. In einer bevorzugten allgemeinen Ausführung kann deshalb die Strukturformel des Äschynites mit

A₁₋ₓB_{2-y}B'_{y}(O,OH,F)_{6±z}

angegeben werden.

Bevorzugt beträgt die Dicke der Äschynit-Meßelektrode 5 bis 100 Mikrometer, vorzugsweise jedoch 20 bis 30 Mikrometer, wobei die Äschynit-Meßelektrode durch ein an sich bekanntes Verfahren, vorzugsweise in Dickfilmtechnik aufgebracht werden kann.

In bevorzugter Weise ist der Sensor aus verschiedenen Schichten aufgebaut, d.h., auf einem ebenen elektrisch isolierenden Substrat, beispielsweise Aluminiumoxid, ist eine Referenzelektrode beispielsweise aus Platin aufgebracht, worüber sich eine Schicht ionenleitenden Festelektrolyten und die Äschynit-Meßelektrode befindet.

In vorteilhafter Ausführung wird der obige Sensor zur Bestimmung von ungesättigten und gesättigten Kohlenwasserstoffen, in Verbrennungsabgasen eingesetzt. Der Schichtaufbau des Sensors erlaubt eine erhöhte Miniaturisierung und daher eine konstruktive Vereinfachung und darüberhinaus eine kostengünstigere Herstellung, da der Festelektrolyt porös gesintert wird. Dadurch kann auf die Zuführung für ein Referenzgas verzichtet werden, was den Sondenaufbau erheblich vereinfacht.

### Zeichnung

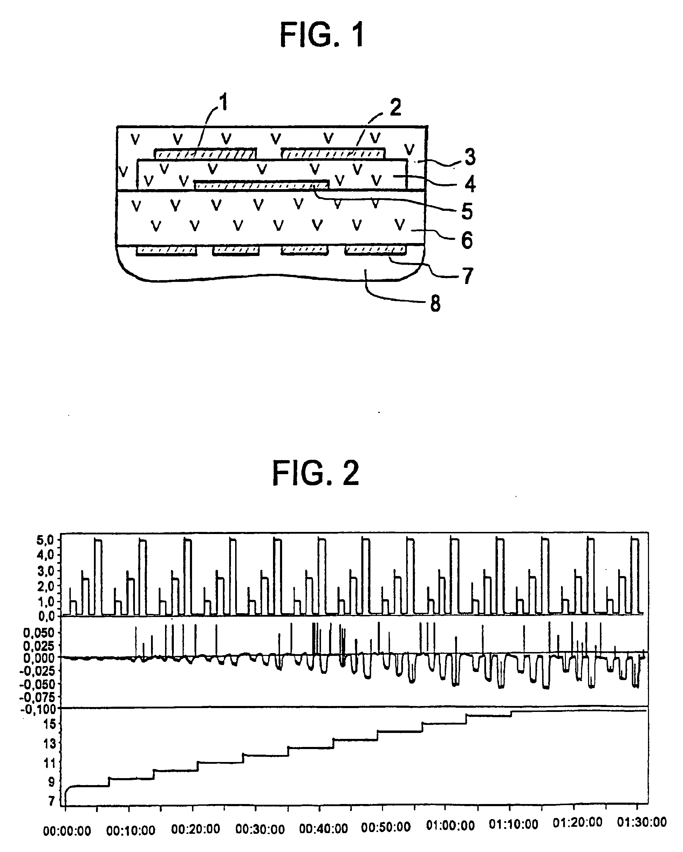

Figur 1 zeigt einen Schnitt durch einen erfindungsgemäßen Sensor. Figur 2 zeigt die Meßkurve eines erfindungsgemäßen Sensors bei der Detektion eines Kohlenwasserstoffes.

### Beschreibung der Ausführungsbeispiele

In Figur 1 ist ein erfindungsgemäßer Sensor im Schnitt dargestellt. Ein elektrisch isolierendes, planares keramisches Substrat 6, beispielsweise Aluminiumoxid, trägt auf der einen Großfläche in übereinanderliegenden Schichten eine Referenzelektrode 5, beispielsweise aus Platin, einen Festelektrolyten 4, Meßelektroden 1 und 2 sowie eine gasdurchlässige Schutzschicht 3. Auf der gegenüberliegenden Großfläche des Substrates ist eines Fieizervorrichtung 7 mit Abdeckung 8 aufgebracht.

Zur Bestimmung der Konzentration oxidierbarer Bestandteile in Abgasen wird der Sensor mittels der Heizervorrichtung 7 auf eine Temperatur zwischen 300 und 1000°C, vorteilhafterweise auf ungefähr 600°C erhitzt. Um die Diffusion des Meßgases zur Referenzelektrode und die Einstellung des Sauerstoffgleichgewichtspotentiales zu ermöglichen, kann der Festelektrolyt porös gesintert sein, der Fachmann kann aber auch andere, ihm bekannte Lösungen wählen, wie z.B. die Zuleitung über einen Referenzkanal oder die Zuleitung einer Referenzgasatmosphäre.

Der Sensor erzeugt über den sauerstoffionenleitenden Festelektrolyten eine Zellspannung durch eine erste, mit Hilfe der Referenzelektrode eingestellte Halbzellenreaktion und eine zweite, durch die zu bestimmenden oxidierbaren Gaskomponenten beeinflußte Halbzellenreaktion an mindestens einer Meßelektrode. Über Kalibrierungskurven werden aus den Spannungswerten die Konzentration der Gaskomponenten ermittelt. Der erfindungsgemäße Sensor ist somit im einfachsten Fall mit einer Referenzelektrode, die die Gleichgewichtseinstellung des Gasgemisches katalysiert, mit einer Meßelektrode, die die Gleichgewichtseinstellung des Gasgemisches nicht oder nur wenig zu katalysieren vermag, einsatzfähig. Es ist jedoch auch möglich, zwei Meßelektroden aufzubringen, wie in Figur 1 dargestellt, oder auch mehrere Meßelektroden mit jeweils unterschiedlicher katalytischer Aktivität zur Einstellung von Sauerstoffgleichgewichtszuständen. Die Meßelektroden reagieren dann mit unterschiedlicher, von der Gasart abhängiger Spannung bezogen auf die Referenzelektrode.

In einer weiteren Ausführungsform ist der Festelektrolyt mit Fremdatomen dotiert, z.B. mit einem Zusatz von 0,01 bis 10 Volumenprozent Platin. Dabei werden am Festelektrolyten die zu messenden Gase katalytisch umgesetzt, so daß nur die dem thermodynamischen Gleichgewicht entsprechenden Gase von der Referenzelektrode erfaßt werden oder der Festelektrolyt setzt nur die das Referenzsignal störenden Gase um.

Nach einer weiteren Alternative werden zusätzlich zum Festelektrolyten eine oder mehrere Meßelektroden porös ausgebildet, wodurch die Gasdiffussion zur Referenzelektrode erleichtert wird.

Als Meßelektrodenstoffe werden erfindungsgemäß Verbindungen der allgemeinen Formel AB₂O₆, insbesondere Verbindungen aus der Klasse der Äschynite, Samarskite und Euxenite verwendet. Im folgenden werden alle diese drei Verbindungsklassen unter dem Begriff "Äschynite" subsummiert. Diese haben eine hohe spezifische Empfindlichkeit, insbesondere für gesättigte und ungesättigte Kohlenwasserstoffe. Diese wird erhöht, indem beispielsweise die B-Position teilweise durch ein Übergangsmetall ersetzt wird.

Ein Ausführungsbeispiel für diese Verbindungsklasse ist SmTiNi_{0,03}Nb_{1,1}O₆. Statt Nickel können in dieser Verbindung ebenso Platin, Palladium oder auch Münzmetalle zur Dotierung verwendet werden. Diese Dotierung erhöht die Empfindlichkeit des verwendeten Äschynites insbesondere für ungesättigte Kohlenwasserstoffe. SmTiNi_{0,03}Nb_{1,1}O₆ wird durch Hydrothermalsynthese dargestellt.

Der hohen Empfindlichkeit von Äschyniten, insbesondere für ungesättigte Kohlenwasserstoffe, liegen adsorptive Wechselwirkungen der π-Elektronen der Doppelbindungen des entsprechenden Kohlenwasserstoffes mit elektrophilen Akzeptorplätzen auf der (1,1,0) oder (1,1,1) Äschynitoberfläche zugrunde.

Ein Herstellungsverfahren für einen erfindungsgemäßen Sensor beschreibt das nachfolgende Beispiel: SmTiNi_{0,03}Nb_{1,1}O₆, hergestellt durch Hydrothermalsynthese, wird in allgemein bekannter Dickfilmtechnik auf ein Substrat aufgedruckt, das eine Referenzelektrode, beispielsweise aus Platin, und darüber eine Festelektrolytschicht trägt, bestehend beispielsweise aus stabilisiertem Zirkonium- oder Hafniumoxid. Auf der gegenüberliegenden Seite des Substrates ist eine Heizervorrichtung aufgebracht. Der Sensor wird bei 1200°C 90 Minuten lang mit einer Aufheiz-Abkühlrampe von 300°C/h gesintert. Der Festelektrolyt hat nach dem Sintern Poren im Größenbereich von 10 µm bis 100 µm. Mit Hilfe einer isoliert zum Festelektrolyten angebrachten Platinleiterbahn, die nur die Meßelektrode kontaktiert, wird die Spannung an der so aufgebauten Zelle an einem Widerstand von 1 mΩ zwischen der Referenz- und der Äschynitelektrode gemessen. Der Sensor wird dabei durch seine Heizervorrichtung auf 600°C erwärmt.

Figur 2 zeigt eine Meßkurve des erfindungsgemäßen Sensors mit der Äschynitverbindung SmTiNi₀,₀₃N_{1,1}O₆. Der obere Teil von Figur 2 zeigt die Konzentration des Meßgases, in diesem Falle Propen, mit einer Sauerstoffbeimischung von 10 Vol.% an. Der Wert an der Ordinate wird dabei mit 10² ppm multipliziert, um die Konzentration in ppm ermitteln zu können. Der mittlere Teil zeigt das Sensorsignal, gemessen in Volt, während der Meßperiode von einer Stunde und 30 Minuten an. Der untere Teil von Figur 2 gibt die Erhöhung der Heizleistung, gemessen in Watt, wieder.

## Patentansprüche

1. Sensor zur Bestimmung der Konzentration oxidierbarer Bestandteile in einem Gasgemisch, insbesondere zur Bestimmung gesättigter und ungesättigter Kohlenwasserstoffe, bei dem ein ionenleitender Festelektrolyt (4) mit mindestens einer einer Referenzatmosphäre ausgesetzten Referenzelektrode (5) und mit mindestens einer dem Messgas ausgesetzten Messelektrode (1, 2) ausgebildet ist,
**dadurch gekennzeichnet, dass** die Messelektrode (1, 2) aus einem gemischten Metalloxid der die Struktur wieder gebenden allgemeinen Formel
AB₂O₆
besteht, wobei A aus der Gruppe bestehend aus den Seltenerdmetallen, den Erdalkalimetallen, den Elementen der dritten Hauptgruppe, den natürlich vorkommenden Aktiniden, Fe, Pb oder Bi,
und wobei B aus der Gruppe bestehend aus den Metallen der vierten bis fünften Nebengruppe, Sn, Sb, Re oder Fe ausgewählt ist.

2. Sensor nach Anspruch 1, **dadurch gekennzeichnet, daß** die gemischten Metalloxide künstlich hergestellt und/oder natürlichen Ursprunges sind.

3. Sensor nach Anspruch 1, **dadurch gekennzeichnet, daß** die Position B der gemischten Metalloxide zumindest teilweise ersetzt ist durch Übergangsmetalle, ausgewählt aus den Platinmetallen, den Münzmetallen, der Eisengruppe, Rhenium, oder durch Übergangsmetalle im Oxidationszustand +5, ausgewählt aus den Übergangsmetallen der vierten bis fünften Nebengruppe.

4. Sensor nach Anspruch 3, **dadurch gekennzeichnet, daß** der Anteil der Ersatzionen der Position B des gemischten Metalloxides 0,005 bis 0,2 Mol%, bezogen auf B, beträgt.

5. Sensor nach Anspruch 1, **dadurch gekennzeichnet, daß** die Sauerstoffposition der gemischten Metalloxide zumindest teilweise ersetzt oder im Überschuß besetzt ist durch Hydroxid- und/oder Fluoridanionen.

6. Sensor nach Anspruch 1, **dadurch gekennzeichnet, daß** die Position A der gemischten Metalloxide zumindest teilweise Fehlstellen aufweist.

7. Sensor nach Anspruch 1, **dadurch gekennzeichnet, daß** die Dicke der Meßelektrode (1, 2) 5 bis 100 µm, vorzugsweise 20 bis 30 µm beträgt.

8. Sensor nach Anspruch 1 oder 7, **dadurch gekennzeichnet, daß** die Meßelektrode (1, 2) mittels Dickfilmtechnik aufgebracht ist.

9. Sensor nach Anspruch 1, **dadurch gekennzeichnet, daß** in übereinanderliegenden Schichten auf der einen Fläche eines ebenen, elektrisch isolierenden Substrates (6), die Referenzelektroden (5) der ionenleitende Festelektrolyt (4) und mindestens eine Meßelektrode (1, 2) angeordnet sind.

10. Verwendung des Sensors nach einem der vorhergehenen Ansprüche zur Bestimmung von Kohlenwasserstoffen, insbesondere von gesättigten und ungesättigen Kohlenwasserstoffen.

## Claims

1. Sensor for determining the concentration of oxidizable constituents in a gas mixture, in particular for determining saturated and unsaturated hydrocarbons, in which an ion-conducting solid electrolyte (4) is designed with at least one reference electrode (5) which is exposed to a reference atmosphere and with at least one measurement electrode (1, 2) which is exposed to the measurement gas, **characterized in that** the measurement electrode (1, 2) comprises a mixed metal oxide of the general formula
AB₂O₆
which represents the structure, with A being selected from the group consisting of the rare-earth metals, the alkaline earth metals, the elements of the third main group, the naturally occurring actinides, Fe, Pb or Bi, and with B being selected from the group consisting of the metals of the transition groups IV to V, Sn, Sb, Re or Fe.

2. Sensor according to Claim 1, **characterized in that** the mixed metal oxides are produced artificially and/or are of natural origin.

3. Sensor according to Claim 1, **characterized in that** the position B of the mixed metal oxides is at least partially substituted by transition metals, selected from the platinum metals, the coin metals, the iron group, rhenium, or by transition metals in the oxidation state +5, selected from the transition metals of transition groups IV to V.

4. Sensor according to Claim 3, **characterized in that** the fraction of substitution ions of the position B of the mixed metal oxide is 0.005 to 0.2 mol%, based on B.

5. Sensor according to Claim 1, **characterized in that** the oxygen position of the mixed metal oxides is at least partially substituted or occupied in excess by hydroxide anions and/or fluoride anions.

6. Sensor according to Claim 1, **characterized in that** the position A of the mixed metal oxides has at least in parts defects.

7. Sensor according to Claim 1, **characterized in that** the thickness of the measurement electrode (1, 2) is 5 to 100 µm, preferably 20 to 30 µm.

8. Sensor according to either of Claims 1 and 7, **characterized in that** the measurement electrode (1, 2) is applied by means of the thick-film technique.

9. Sensor according to Claim 1, **characterized in that** the reference electrodes (5), the ion-conducting solid electrolyte (4) and at least one measurement electrode (1, 2) are arranged in layers, one above the other, on one surface of a planar electrically insulating substrate (6).

10. Use of the sensor according to one of the preceding claims for determining hydrocarbons, in particular saturated and unsaturated hydrocarbons.

## Revendications

1. Capteur pour déterminer la concentration de constituants oxydables dans un mélange gazeux, en particulier pour déterminer des hydrocarbures saturés et insaturés, dans lequel un électrolyte solide (4) conducteur d'ions comporte au moins une électrode de référence (5) exposée à une atmosphère de référence et au moins une électrode de mesure (1, 2) exposée au gaz de mesure,
**caractérisé en ce que**
l'électrode de mesure (1, 2) est constituée d'un oxyde métallique mixte de formule générale reproduisant la structure
AB₂O₆
A étant choisi dans le groupe constitué des métaux, des terres rares, des métaux alcalinoterreux, des éléments du troisième groupe principal, des actinides présents à l'état naturel, de Fe, de Bp ou de Bi, et
B dans le groupe constitué des métaux du quatrième au cinquième sous-groupes, de Sn, Sb, Re ou de Fe.

2. Capteur selon la revendication 1,
**caractérisé en ce que**
les oxydes métalliques mixtes sont synthétiques et/ou d'origine naturelle.

3. Capteur selon la revendication 1,
**caractérisé en ce que**
la position B des oxydes métalliques mixtes est remplacée au moins en partie par des métaux de transition choisis parmi les métaux du groupe platine, les métaux pour pièces de monnaie, le groupe fer, le rhénium ou par des métaux de transition à l'état d'oxydation +5, choisis parmi les métaux de transition du quatrième au cinquième sous-groupe.

4. Capteur selon la revendication 3,
**caractérisé en ce que**
la fraction d'ions de remplacement de la position B de l'oxyde métallique mixte est de 0,005 à 0,2 % en moles par rapport à B.

5. Capteur selon la revendication 1,
**caractérisé en ce que**
la position oxygène des oxydes métalliques mixtes est remplacée ou bien occupée en excédent par des ions hydroxyde et/ou fluorure.

6. Capteur selon la revendication 1,
**caractérisé en ce que**
la position A des oxydes métalliques mixtes présente au moins en partie des manques.

7. Capteur selon la revendication 1,
**caractérisé en ce que**
l'électrode de mesure (1, 2) a une épaisseur de 5 à 100 µm, de préférence de 20 à 30 µm.

8. Capteur selon la revendication 1 ou la revendication 7,
**caractérisé en ce que**
l'électrode de mesure (1, 2) est appliquée au moyen de la technique des couches épaisses.

9. Capteur selon la revendication 1,
**caractérisé en ce que**
les électrodes de référence (5), l'électrolyte solide (4) conducteur d'ions et au moins une électrode de mesure (1, 2) sont disposés dans des couches superposées sur l'une des faces d'un substrat (6) plat électriquement isolant.

10. Utilisation du capteur selon l'une des revendications précédentes pour déterminer la présence d'hydrocarbures, en particulier d'hydrocarbures saturés et insaturés.
